# EUROPÄISCHE PATENTANMELDUNG

(11) **EP 0 657 518 A1**
(43) Veröffentlichungstag der Anmeldung: **14.06.1995**
(21) Anmeldenummer: 94117174.6
(22) Anmeldetag: 31.10.1994
(51) Int. Cl.: C09J 7/02, B65D 65/34

(54) **Selbstklebender Aufreissstreifen und Verfahren zu seiner Herstellung**

(30) Priorität: 11.11.1993 DE 4338524
(71) Anmelder: WOLFF WALSRODE AG, D-29655 Walsrode (DE)
(72) Erfinder: Blum, Thomas, Dr., D-27283 Verden-Hönisch (DE); Rössmann, Manfred, D-29664 Walsrode (DE); Reiners, Ulrich, Dr., D-29643 Neuenkirchen (DE)
(74) Vertreter: Gremm, Joachim, Dr.

(57) **Zusammenfassung**

Die vorliegende Erfindung betrifft einen selbstklebenden Aufreißstreifen aus einer biaxial gereckten Trägerfolie oder Laminaten daraus, welche zuerst in einem Arbeitsgang mit Farbe, Releasesystem und Kleberschicht, die insbesondere aus wässrigem Medium aufgebracht werden, versehen werden, dem sich weitere Arbeitsgänge wie das Aufschneiden bzw. das Verspulen anschließen.

## Beschreibung

Die vorliegende Erfindung betrifft einen selbstklebenden Aufreißstreifen aus einer biaxial gereckten Trägerfolie oder Laminaten daraus, welche zuerst in einem Arbeitsgang mit Farbe, Releasesystem und Kleberschicht, die insbesondere aus wässrigem Medium aufgebracht werden, versehen werden, dem sich weitere Arbeitsgänge wie das Aufschneiden bzw. das Verspulen anschließen.

Aufreißstreifen sind seit langem bekannt und dienen in verschiedenen Formen als Öffnungshilfe für Zigarettenpackungen, Süßwarenverpackungen und ähnlichen Verpackungen, die mit einer Folie eingeschlagen sind. Dabei wird der Aufreißstreifen an der Verpackungsfolie so befestigt, daß man zum Öffnen an dem Aufreißstreifen zieht und damit die Einschlagfolie an der gewünschten Stelle zerstört.

Traditionell sind Aufreißstreifen im Einsatz, die eine Hotmeltschicht tragen. Beispiele dieser Art werden in US 339690, US 3187982, US 3311032 oder CA 749198 beschrieben. Bekannt ist auch das Aufbringen von Wachs oder Hotmelt auf den Aufreißstreifen vor dem Applizieren auf die Folie direkt in der Verpackungsmaschine. Zu den älteren Systemen gehört auch das Anlösen des Aufreißstreifens mit einem Lösungsmitel vor dem Aufbringen oder eine direkte Versiegelung des Aufreißstreifens mit der Verpackungsfolie.

Eleganter kann ein Aufreißstreifen verwendet werden, der selbstklebend ausgerüstet ist. Dazu bedient man sich einer monoaxial gereckten Trägerfolie, die mit einer selbstklebenden Schicht einerseits und einer Silikonreleaseschicht andererseits mit optionalem Druck unter einer der beiden Schichten ausgestattet ist.

Solche oder ähnliche Aufbauten sind für die Herstellung von Haftklebebändern seit langer Zeit bekannt (DE 2104817, US 3088848, US 3482683, US 2956904). Darin wird die Verwendung solcher Folienaufbauten für selbstklebende Aufreißstreifen nicht beschrieben.

Die Verwendung von selbstklebenden Bändern dieser Art als Aufreißstreifen werden in der Zeitschrift "Packaging Review " vom Febr. 1973, S57 erwähnt.

Haftklebebänder mit u.a. Polyesterfolie oder Laminaten aus Polyesterfolien werden zum Verschließen und leichtem Öffnen von Dosen z. B. für Fruchtsäfte eingesetzt (CA 1114278, JP 61190440).

Es ist auch bekannt, daß Haftkleberschichten für Haftklebebänder mittels Elektronenstrahlen gehärtet werden (US 2956904, US 4246297, EP 0453254). Speziell EP 0453254 beschreibt die Option zusätzlich eine Releaseschicht in einem Arbeitsgang aufzubringen. Es fehlt aber deren Verwendung als selbstklebender Aufreißstreifen, was durchaus möglich ist.

Ein Verpackungsmaterial mit einem selbstklebenden Aufreißstreifen aus vorzugsweise monoaxial orientiertem Trägermaterial, der mit Hilfe einer angetriebenen Abspulvorrichtung aufgebracht wird, beschreibt EP 121371.

Die bekannten Verfahren zur Herstellung von Haftklebebändern haben den Nachteil, daß die Haftkleber für selbstklebenden Aufreißstreifen in zu großen Schichtdicken aufgetragen werden. Dies kann zu Schwierigkeiten bei der Verarbeitung führen und ist im Hinblick auf eine gewünschte Packstoffreduzierung nicht sinnvoll.

Außerdem sind teure Maschinen (Elektronenstrahlhärtung) oder mehrere in Summe unrentable Arbeitsschritte zur Herstellung nötig.

Beim Abwickeln des Aufreißstreifens aus längsgerecktem Polypropylen von der Rolle treten besonders in Kernnähe hohe Kräfte auf, die zu einer reversiblen Dehnung des Aufreißstreifens führen. Nach dem Aufbringen bzw. Fixieren des Streifens auf den Hüllstoff, der z.B. aus biaxial verstrecktem Polypropylen sein kann, geht der Aufreißsteifen in seine ursprüngliche Form zurück und es kommt besonders bei nicht angetriebenen Abspulvorrichtungen zu Faltenbildung, die die Verpackungsoptik nachteilig stört.

Es stellte sich daher die Aufgabe, einen selbstklebenden Aufreißstreifen herzustellen, der die genannten Nachteile nicht aufweist, und darüber hinaus mit einem umweltverträglichen Verfahren hergestellt wird, das keine aufwendigen Investitionen wie z.B. der einer Elektronenstrahlhärtung erfordert und zugleich ein preiswertes und wirtschaftliches Verfahren zur Herstellung eines Aufreißstreifens darstellt.

Erfindungsgemäß gelang dies durch einen selbstklebenden Aufreißstreifen bestehend aus einer Trägerfolie, einer Releaseschicht, einer der Releaseschicht abgewandten Kleberschicht und gegebenenfalls einem Druck unter der Kleber- oder Releaseschicht, der dadurch gekennzeichnet ist, daß die Trägerfolie aus einer verstreckten Folie besteht, die Release- und Kleberschicht aus wässriger Lösung, Emulsion oder Dispersion aufgetragen werden und daß Releaseschicht, Druckfarbe und Kleberschicht auf einer gegenüber dem Aufreißstreifen um ein vielfaches breiteren Folie in einem Arbeitsgang auf einer Maschine aufgetragen werden, während das Aufschneiden zu Aufreißstreifen mit gewünschter Breite separate Arbeitsgänge darstellen, und daß bei der Applikation des Aufreißstreifens auf einen Antrieb in den Abspulvorrichtungen verzichtet werden kann.

Als Trägerfolie dient eine mindestens einschichtige 15-60 µm dicke, mindestens monoaxial, bevorzugt biaxial verstreckte Folie, die vorzugsweise aus isotaktischem Polypropylen, aus Polystyrol, aus Polyamid oder aus Polyester hergestellt wird. Besonders bevorzugt wird eine Trägerfolie aus Polyester mit einer Dicke von 20-40µm, die beidseitig druckvorbehandelt ist. Für die Releaseschicht werden vorzugsweise ein- oder mehrkomponentige wässrige Kondensations- oder Additionsvernetzende Trennsysteme auf Silikonbasis eingesetzt. Sie werden mit einem Glattwalzenwerk oder einem Tiefdruckauftragswerk aufgetragen und getrocknet bzw gehärtet. Als Klebeschicht finden in Form wässriger Systeme applizierbare Haftkleber Einsatz, deren klebewirksame Substanzen vorzugsweise aus Poly(meth)acrylaten, (Meth)acrylatcopolymerisaten, Polyvinylacetaten oder Gemischen daraus, die gegebenenfalls haftverstärkende Harze enthalten, bestehen. Diese können zusätzlich durch Beimischung von Vernetzern teilvernetzt werden oder aber auch als selbstvernetzende Systeme vorliegen. Sie sind außerdem mit den üblichen Hilfsmitteln ausgerüstet. Aufgetragen werden die wässrigen Haftkleber nach dem Aufbringen der Releaseschicht auf der Rückseite der Trägerfolie durch ein oder mehrere Auftragswerke, denen jeweils ein separater Trockenkanal nachgeschaltet ist, in einer Gesamtschichtdicke von 3,5 - 12 µm, vorzugsweise 5 - 10 µm.

Für spezielle Anwendungen kann die Trägerfolie eingefärbt sein. Es kann auch eine farblose Trägerfolie benutzt werden, die in einem Arbeitsgang mit dem Aufbringen des Releasesystems und des Klebers entweder unter der Releaseschicht oder unter der Kleberschicht ein- oder mehrfarbig bedruckt wird.

Als Ausgangsmaterial für die Haftkleberschicht dienen als Reinsubstanzen oder Mischungskomponenten untereinander oder mit Wasser:
1.) Produkt XPE 425
   (Acrylic Pressure Sensitive Adhesive Emulsion der Firma AV Chemie AG)
   Festkörperanteil 60%
   Dichte 1,0 g/cm³
   Viskosität (Brookfield RVT, Sp 2, 20 RPM, 25°C) 250mPas
   pH-Wert 5
2.) Ipacoll D 790/5
   Haftklebedispersion der Fa. Fuller
   Polyacrylate
   Festkörper ca 54%
   pH-Wert 6
   Viskosität (DIN 51550, Brookfield HBT, 20°C 20RPM) 4000 mPas
3.) Ipacoll D 773
   Haftklebedispersion der Fa. Fuller
   Vinyl-Acetate,-Maleinate/Acrylat-Polymer
   Festkörper ca 51%
   pH-Wert 4-6
   Viskosität (DIN 51550, Brookfield HBT, 20°C 20RPM) 3000 mPas
4.) Ipacoll LP 2730
   Haftklebedispersion der Fa. Fuller
   modifiziertes Polyacrylat
   Festkörper ca 55%
   pH-Wert 4-5
   Viskosität (DIN 51550, Brookfield HBT, 20°C 20RPM) 8000 mPas
5.) Acronal 4D,
   Polymerdispersion der Fa. BASF
   pH-Wert (DIN 53785) 6-7,5
   Dichte (DIN 51757) 1,02 g/cm³
   Viskosität (Cotraves Rheometer Typ STV bei 25°C, Geschwindigkeit III, Meßkörper A) 15-35 mPas
   Festkörpergehalt (DIN 53189) 50 %
6.) Acronal 30 D,
   Dispersion eines Copolymerisates auf der Basis von n-Butylacrylat der Fa. BASF
   pH-Wert (DIN 53785) 5-7,5
   Dichte (DIN 51757) 1.03
   Viskosität (Cotraves Rheometer Typ STV bei 25°C, Geschwindigkeit II, Meßkörper A) 10-70 mPas
   Festkörpergehalt (DIN 53189) 50%
   selbstvernetzend
7.) Acronal 80 D
   Polymerdispersion der Fa. BASF
   pH-Wert (DIN 53785) 4,5-5,5
   Dichte (DIN 51757) 1,01 g/cm³
   Viskosität (Cotraves Rheometer Typ STV bei 25°C, Geschwindigkeit III, Meßkörper B) 100-220 mPas
   Festkörpergehalt (DIN 53189) 50%
   selbstvernetzend
8.)Acronal 500 D
   Polymerdispersion der Fa. BASF
   pH-Wert (DIN 53785) 3,5-4,7
   Dichte (DIN 51757) 1,06 g/cm³
   Viskosität (Cotraves Rheometer Typ STV bei 25°C, Geschwindigkeit III, Meßkörper A) 17-27 mPas
   Festkörpergehalt (DIN 53189) 50%
9.) Crodafix CF 27-017
   Dispersion von Acrylsäureestern unter Mitverwendung von Acrylnitril der Fa. Croda
   pH-Wert 2-3
   Festkörpergehalt ca 55%
10.) Crodafix 27-062
   Dispersion eines Polyacrylsäurebutylesters der Fa. Croda
   pH-Wert 6-7,5
   Festkörpergehalt ca 50%
11.) Morstic 219
   Polyacrylatemulsion der Fa. Morton
   pH-Wert 7,3 - 8,3
   Festkörpergehalt 57%
   Viskosität (Brookfield RVT, 30 RPM, Spindel 3) 400-800cps
12.)Vinnapas Dispersion AF 75
   weichmacherfreie Polymer-Dispersion eines Acrylsäureestercopolymeren in Wasser der Fa. Wacker
   Festkörpergehalt (DIN 53189) 60%
   Dichte (20°C) 1,00 g/cm³
   Viskosität (Brookfield RVT, 20RPM, 23°C) 3500-6500 mPas
   pH-Wert 5
13.) Vinnapas-Dispersion EAF 60
   weichmacherfreie Polymerdispersion eines Terpolymeren aus Vinylacetat, Ethylen und Acrylsäureester in Wasser
   Festkörpergehalt (DIN 53189) 60%
   Dichte (20°C) 1,03 g/cm³
   Viskosität (Brookfield RVT, 20RPM, 23°C, Spindel 5) 8000-16000 mPas
   pH-Wert 5,5
14.) Crodafix EP 27-311
   Versuchsprodukt der Fa. Croda

Als Ausgangsmaterialien für die Releaseschicht dienen:
1.) Silikonemulsion aus:
   Polyhydrogenmethylsiloxan in wäßriger Zubereitung mit Polydimethyl-siloxan/Polyaminoether/Dialkylzinnverbindung in wäßriger Zubereitung
   (Perlit Si/SW der Fa. Bayer AG)
2.) Silikonemulsion aus:
   Polymer SM 2013 und Katalysator SM 2014C
   Kondensationssystem der Fa. GE Silicones
3.) Silikonemulsion aus:
   Polymer SM 2800 und Katalysator SM 2801
   Additionssystem der Fa. GE Silicones
4.) essigsaure Silikonemulsion aus
   Phoboton SP (oder Phoboton KS), einer kationaktiven Emulsion auf Polysiloxanbasis, mit Phoboton BC neu, einer kationaktiven Emulsion eines Polydimethylsiloxans und eines selbstvernetzenden Polymerisates mit Zusatz einer metallorganischen Verbindung, und gegebenenfalls Phoboton-Katalysator SN der Chemischen Fabrik Pfersee GmbH
5.) Rhodorsil-Emulsion 21808
   der Fa. Rhone-Poulenc
6.) Rhodorsil-Emulsion 891
   der Fa. Rhone-Poulenc

Durch den gewählten Aufbau des selbstklebenden Aufreißstreifens in Verbindung mit der Herstellung in einer Tiefdruckmaschine, die gegebenenfalls mit einem zusätzlichen Klebstoffauftragswerk ausgestattet ist, gelingt es in besonders einfacher und wirtschaftlicher Weise, einen selbstklebenden Aufreißstreifen herzustellen, der die genannten Nachteile nicht aufweist und durch die Verwendung von wässrigen Releasesystemen und wässrigen Klebern mit einem umweltverträglichen Verfahren produziert wird.

Das Herstellen des beschriebenen selbstklebenden Aufreißstreifens erfolgt im ersten Schritt auf einer üblichen Tiefdruckmaschine, die mit einem Wendekreuz oder einem oder mehreren umsteuerbaren Druckwerken und gegebenenfalls mit einem Klebstoffauftragswerk ausgestattet ist. Dabei erfolgt in der bevorzugten Ausführungsform zunächst der Druck des Silikonsystems auf einer in der Maschine druckvorbehandelten Seite der Trägerfolie. Danach läuft die Folie über ein Wendekreuz und wird auf der Rückseite mit einem farbigen Druck versehen und ein- oder mehrmals mit Kleber beschichtet oder wird alternativ mit umsteuerbaren Druckwerken auf der Rückseite bedruckt und ein oder mehrmals mit Kleber beschichtet. Der Klebstoffauftrag erfolgt vorzugsweise durch ein Klebstoffauftragswerk, kann aber auch durch Druck in einem oder mehreren Auftragswerken erfolgen.

In einer anderen Ausführungsform wird zuerst gedruckt und danach auf dem Druck das Releasesystem appliziert. Nach dem Wenden erfolgt mittels des oben ausgeführten Verfahrens der Klebstoffauftrag.

In den nachfolgenden Beispielen werden folgende Prüfmethoden und Verfahren zur Bestimmung der Werte und Eigenschaften verwendet:

### Viskosität

Die Viskosität wird nach unterschiedlichen Methoden in Anlehnung an DIN 51550 mit unterschiedlichen Rheometern, die mit verschiedenen Meßkörpern ausgestattet sind und mit unterschiedlichen Geschwindigkeiten betrieben werden, gemessen.

### pH-Wert

Der pH-Wert wird nach DIN 53785 gemessen.

### Dichte

Die Dichte wird nach DIN 51757 gemessen.

### Festkörpergehalt

Der Festkörpergehalt wird nach DIN 53189 gemessen.

### Auftragsgewicht

Das Auftragsgewicht des Klebers wird üblicherweise an der fertigen Rollenware vor dem Verspulen ermittelt. Dazu bestimmt man das Gewicht einer Probe mit und ohne Kleber, errechnet das Gewicht des aufgetragenen Klebers und rechnet auf einem Quatratmeter um. Den Klebstoff entfernt man dabei mit einem geeigneten Lösungsmittel von der Probe.
In der Tabelle entspricht ≧15g/m² einem hohen Klebstoffauftrag und ≧10g/m² einem niedrigen Klebstoffauftrag.

### Farbverankerung und Klebstoffverankerung

Die Farbverankerung und die Klebstoffverankerung werden durch Aufkleben und Abziehen eines Tesafilms Nr 4154 der Fa. Beiersdorf, Hamburg, und Bewerten der verbleibenden Farbe bzw des verbleibenden Klebers ermittelt.
Normalerweise erfolgt eine Einteilung in Noten von 1 (sehr gute Verankerung) bis 5 (keine Verankerung). In der Tabelle entsprechen die Noten 1 und 2 der Bewertung gut. Die Noten 3,4 und 5 werden als schlecht zusammengefaßt.

### Beispiele und Vergleichsbeispiele

### Vergleichsbeispiel 1

In separaten Arbeitsschritten wird auf eine längsgereckte 40µm dicke und 1000mm breite Polypropylenfolie zuerst in einer Tiefdruckmaschine einseitig eine Goldfarbe mit Bronzeschliff gedruckt. Danach erfolgt auf die der Farbe abgewandten Seite der Auftrag eines elektronenstrahlhärtenden lösungsmittelfreien Silikonsystems, das mit Elektronenstrahlen gehärtet wird. Abschließend beschichtet man die bedruckte Seite mit 17 g/m² eines auf Styrol/Isopren- oder Styrol/Butadien-Styrol-basierenden Haftklebesystems aus der Schmelze oder Lösung. Diese so hergestellte Rollenware wird in weiteren Arbeitsschritten zu Aufreißstreifen in 1,5-5mm Breite verspult.

### Vergleichsbeispiel 2

Eine 1000mm breite und 36µm dicke biaxial gereckte Polyesterfolie wird zuerst auf der elektrisch vorbehandelten Seite mit der Releaseemulsion 1 in einer Tiefdruckmaschine bedruckt und bei Temperaturen >100°C thermisch gehärtet. In einem separaten Arbeitsgang erfolgt auf der entgegengesetzten Folienseite in einem Schritt in einer Tiefdruckmaschine der Druck einer oder mehrerer Farben und danach der Auftrag der Haftklebeemulsion 1, die mit Leitungswasser auf eine Viskosität von 22 sec im Ford 4 Becher (ca 50cps) verdünnt wurde. Mit einem 60er Raster ergibt sich ein Auftragsgewicht von 5,4 g/m². Die so hergestellte Rollenware wird in weiteren Arbeitsschritten zu Aufreißstreifen in 1,5-5mm Breite verspult.
Durch Silikonabklatsch nach dem Druck der Releaseemulsion 1 erzielt man im weiteren Arbeitsgang keine ausreichende Farb- bzw Klebstoffverankerung. Die so hergestellten Aufreißstreifen erfüllen die geforderten Ansprüche nicht.

### Beispiel 1

Eine 1000mm breite und 36µm dicke biaxial gereckte Polyesterfolie (Hostaphan RN 36 der Fa. Hoechst AG) wird in einem Arbeitsgang in einer Tiefdruckmaschine zuerst auf der nicht vorbehandelten Seite mit einer Coronaentladung versehen, dann auf dieser frisch vorbehandelten Seite mit Silikonemulsion 1 beschichtet und thermisch bei 150°C getrocknet bzw. gehärtet und anschließend nach dem Durchlaufen eines Wendekreuzes auf der Rückseite analog dem Vergleichsbeispiel 2 einmalig mit der Haftklebeemulsion 1 im Tiefdruck beschichtet und getrocknet. Mit einem 60er Raster ergibt sich ein Auftragsgewicht von 5,4 g/m². Die so hergestellte Rollenware wird in weiteren Arbeitsschritten zu Aufreißstreifen in 1,5-5mm Breite verspult.

### Beispiel 2

Herstellung und Folienaufbau erfolgt analog dem Beispiel 1 mit dem Unterschied, daß in einem zusätzlichen Tiefdruckwerk ein weiterer Klebstoffauftrag mit einem 60er Raster erfolgt. Dadurch erzielt man einen Klebstoffauftrag von ca 10 g/m² insgesamt. Die so hergestellte Rollenware wird in weiteren Arbeitsschritten zu Aufreißstreifen in 1,5-5mm Breite verspult.

### Beispiel 3

Herstellung und Folienaufbau erfolgt analog dem Beispiel 1 mit dem Unterschied, daß der Klebstoff nicht mit einem Tiefdruckauftragswerk, sondern mit einem in die Tiefdruckmaschine integriertem Klebstoffauftragswerk für lösungsmittelhaltige Kleber aufgetragen und anschließend getrocknet wird. Der Klebstoff wird im Anlieferungszustand verarbeitet. Durch diese Verfahrensweise erzielt man einen Klebstoffauftrag von 5-10 g/m². Die so hergestellte Rollenware wird in weiteren Arbeitsschritten zu Aufreißstreifen in 1,5-5mm Breite verspult.

### Beispiel 4

Herstellung und Folienaufbau erfolgt analog dem Beispiel 3 mit dem Unterschied, daß zusätzlich vor dem Auftrag der Silikonemulsion 1 der Druck einer oder mehrerer Farben erfolgt. Die so hergestellte Rollenware wird in weiteren Arbeitsschritten zu Aufreißstreifen in 1,5-5mm Breite verspult.

### Beispiel 5

Herstellung und Folienaufbau erfolgt analog dem Beispiel 3 mit dem Unterschied, daß nach dem Wenden vor dem Auftrag des Klebstoffes mit dem Klebstoffauftragswerk zusätzlich der Druck einer oder mehrerer Farben durchgeführt wird. Die so hergestellte Rollenware wird in weiteren Arbeitsschritten zu Aufreißstreifen in 1,5-5mm Breite verspult.

**Tabelle1**

| Ergebniszusammenstellung | Auftragsgewicht des Klebers | Faltenbildung | Farbverankerung | Klebstoffverankerung | Arbeitsschritte zur Rollenware |
|---|---|---|---|---|---|
| Vergleichsbeispiel 1 | hoch | ja | schlecht | gut | 3 |
| Vergleichsbeispiel 2 | niedrig | nein | schlecht | schlecht | 2 |
| Beispiel 1 | niedrig | nein | entfällt | gut | 1 |
| Beispiel 2 | niedrig | nein | entfällt | gut | 1 |
| Beispiel 3 | niedrig | nein | entffällt | gut | 1 |
| Beispiel 4 | niedrig | nein | gut | gut | 1 |
| Beispiel 5 | niedrig | nein | gut | gut | 1 |

## Patentansprüche

1. Selbstklebender Aufreißstreifen bestehend aus einer Trägerfolie, einer Releaseschicht, einer der Releaseschicht abgewandten Kleberschicht und gegebenenfalls einem Druck unter der Kleber- oder Releaseschicht, der dadurch gekennzeichnet ist, daß die Trägerfolie aus einer mindestens monoaxial, bevorzugt jedoch biaxial verstreckten Folie oder einem Laminat aus verstreckten Folien besteht, die Release- und Kleberschicht aus wässriger Lösung, Emulsion oder Dispersion aufgetragen werden und daß Releaseschicht, gegebenenfalls Druckfarbe und Kleberschicht auf die Folie in einem Arbeitsgang aufgetragen werden.

2. Selbstklebender Aufreißstreifen gemäß Anspruch 1, dadurch gekennzeichnet, daß als Trägerfolie eine mindestens einschichtige 15 - 60 µm dicke biaxial verstreckte Folie aus vorzugsweise isotaktischen Polypropylen, Polyethylen, Polystyrol, Polyamid oder Polyester und besonders bevorzugt aus Polyester mit einer Dicke von 20 - 40 µm genutzt wird.

3. Selbstklebender Aufreißstreifen gemäß Ansprüchen 1 oder 2, dadurch gekennzeichnet, daß als Klebeschicht in Form wässriger Systeme applizierbare Haftkleber zum Einsatz kommen, deren Klebewirksame Substanzen vorzugsweise aus Poly(meth)acrylaten, (Meth)acrylatcopolymerisaten, Polyvinylacetaten oder Gemischen daraus, die gegebenenfalls zusätzlich mit haftverstärkenden Harzen, Vernetzern oder weiteren Hilfsmitteln ausgerüstet sind, bestehen, und daß die Klebeschicht eine Schichtdicke von 3,5 - 10µm, vorzugsweise von 4,5 - 8 µm, aufweist.

4. Selbstklebender Aufreißstreifen gemäß einem der Ansprüche 1 bis 3, dadurch gekennzeichnet, daß als Releaseschicht ein- oder mehrkomponentige wässrige Silikonsysteme verwendet werden.

5. Verfahren zur Herstellung selbstklebender Aufreißstreifen gemäß einem der Ansprüche 1 bis 4, dadurch gekennzeichnet, daß die Herstellung im ersten Arbeitsgang auf einer an sich bekannten Tiefdruckmaschine erfolgt, die mit einem Wendekreuz oder einem oder mehreren umsteuerbaren Druckwerken und gegebenenfalls mit einem Klebstoffauftragswerk ausgerüstet ist, dem sich die weiteren Arbeitsgänge wie das Aufschneiden bzw. das Verspulen anschließen.
